# EUROPEAN PATENT APPLICATION

(11) **EP 0 543 611 A1**
(43) Date of publication of application: **26.05.1993**
(21) Application number: 92310464.0
(22) Date of filing: 17.11.1992
(51) Int. Cl.: G06F 3/033, G06F 15/72

(54) **Apparatus and method for creating an image using graphic icons**

(30) Priority: 21.11.1991 JP 331520/91
(71) Applicant: International Business Machines Corporation, Armonk, N.Y. 10504 (US)
(72) Inventor: Hidaka, Kazuyoshi, Yokohama-shi, Kanagawa-ken (JP)
(74) Representative: Burt, Roger James, Dr.

(57) **Abstract**

An apparatus and method are provided which enable a user to easily draw an image having many control points when drawing the image using graphic icons. The control points 11 necessary for defining an image are displayed on an icon display screen 9A together with a graphic icon 10, and information on the operation sequence for control points (111, 112, and 113) are also displayed on the screen, preferably by blinking the control points. The state of the control points specified by the user is displayed in the form of animation (111′, 112′, and 113′) by a control-point moving and displaying apparatus and is displayed on a graphic display screen 9B in the form of drawing points (121, 122, and 123). Hence, when a user draws an image, he or she can quickly and clearly tell which portions of an image should be specified and in which sequence. Further the user can readily see which step of the drawing process he or she is currently at.

## Description

This invention relates to an apparatus and a method for creating an image using graphic icons.

For an apparatus in which an image is created by a user directly specifying points on a screen with a mouse, graphic elements intended to constitute the image are selected by using graphic icons and a menu of words (characters).

It is known to use graphic icons to create an image with a "rubber band". Since in this technique a rubber band is used to draw, for example, a circular arc, the user can confirm the shape of the circular arc being drawn directly on the screen. However, the central angle of the circular arc is determined to be 90° when drawing it. Therefore, to change the angle to another angle, it must be modified by selecting another operation mode. The technique of creating an image with a rubber band is not suitable for an image having many control points.

A method using graphic icons is disclosed in the official gazette of PUPA No. 2-277127. This gazette describes a drawing method in which an image is displayed by selecting an icon in an edit icon menu area and an edit instruction in an edit instruction menu area through mouse operation, and specifying a point in an edit area. With this method, operation is difficult unless the user is familiar with the details of icon operations. To create a circular arc, for example, the system requests an operation for specifying the definition of points for three predetermined positions in a predetermined sequence. However, unless the user is familiar with the predetermined operation sequence, there is a problem in that he or she cannot tell which portions on the circular arc should be specified in which sequence.

Also, if a menu of words (characters) is used, operation is difficult unless the user is familiar with the contents of the menu. Therefore, there is no conventional method for drawing images in which anyone can easily create an image consisting of a plurality of control points.

It is an object of this invention to provide an apparatus and method that allows anyone to easily create an image having many control points using graphic icons.

Accordingly, the present invention provides an image processing apparatus having an image processing means for executing processing in response to operation commands and data provided through operation of an input device, and a means for creating images on a drawing area of a display screen in accordance with the results of the image processing, said apparatus further comprising:
a graphic icon table for storing a plurality of graphic icons, each graphic icon defining an image, said graphic icon table also storing a plurality of control points associated with each graphic icon which need to be specified in order to create the defined image;
means for displaying said plurality of graphic icons in a graphic icon menu area on said display screen;
means for indicating the control points and the operation sequence in which the control points must be specified, for a chosen graphic icon selected through said input device;
an image object table for recording data representing drawing points as the control points of the image, when the drawing points of the image corresponding to the indicated control points of said chosen graphic icon are specified in the drawing area of said display screen through said input device;
said means for creating images displaying the image corresponding to said chosen graphic icon in said drawing area when all control points of said chosen graphic icon have been specified.

In creating an image with graphic icons, it is arranged that the control points necessary for defining the image will be displayed on a graphic display screen together with graphic icons and information about the procedure for manipulating the control points. This enables the user to easily and clearly understand which points at which positions of the image should be specified in what sequence, and at which step of the image creation process he or she is currently at.

The present invention will be described further, by way of example only, with reference to an embodiment thereof as illustrated in the accompanying drawings, in which:
Figure 1 shows a general block diagram of the image processing apparatus in accordance with a preferred embodiment of the present invention;
Figure 2 shows an arrangement of the display screen in Figure 1;
Figure 3 shows graphic icons and their control points;
Figure 4 shows the data structure of an image object table;
Figure 5 shows the data structure of a graphic icon table;
Figure 6 shows a general operation flow diagram of the operation of the image processing apparatus in Figure 1;
Figure 7 shows a flow diagram illustrating the operation of the control-point moving and displaying apparatus in Figure 1;
Figure 8 shows the state transitions of the operation for drawing a square by the method of the preferred embodiment of the present invention;
Figure 9 shows the sequence for specifying the control points of a circular arc;
Figure 10 shows the process for drawing a circular arc by a conventional method;
Figure 11 shows the process for drawing a circular arc by the method of the preferred embodiment of the present invention;
Figure 12 shows the sequence for specifying the control points of an asterisk; and
Figure 13 shows another configuration of the display screen in Figure 1.

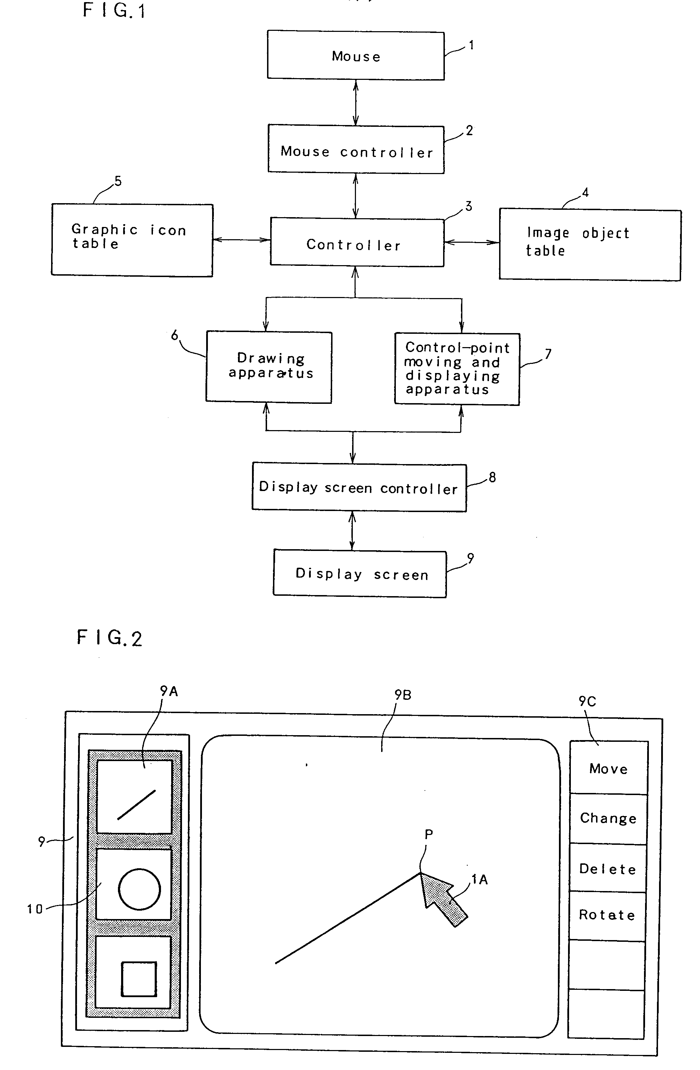

As shown in figure 1, a mouse 1 is used for inputting operation commands and data, and a mouse controller 2 detects a pointing operation by the mouse. A controller 3 having a microprocessor and memories processes an image in a manner which will be discussed later, based on the inputted operation commands and data. An image object table 4 holds the data for thy image to be drawn, and a graphic icon table 5 holds the data for graphic icons. A drawing apparatus 6 for drawing commands, icons, and images on a display screen 9 based on the processing by the controller 3 is also provided. Further a control-point moving and displaying apparatus 7 is used to display (animate) the state of specification of the control points of graphic icons. Finally a display screen controller 8 controls the display screen 9 based on the outputs of the drawing apparatus 6 and the control-point moving and displaying apparatus 7.

Figure 2 shows an arrangement of the display screen 9 in Figure 1.

The display screen 9 has an icon menu area 9A, drawing area 9B, and command area 9C. Various graphic icons 10 including line segments, circles, and rectangles are displayed in the icon menu area 9A. A mouse cursor 1A is placed on one of the graphic icons, which is in turn selected by clicking the mouse 1. An image corresponding to the selected graphic icon is created by specifying an operation command in the command area 9C, as required, and specifying a drawing point P in the drawing area 9B with the mouse 1.

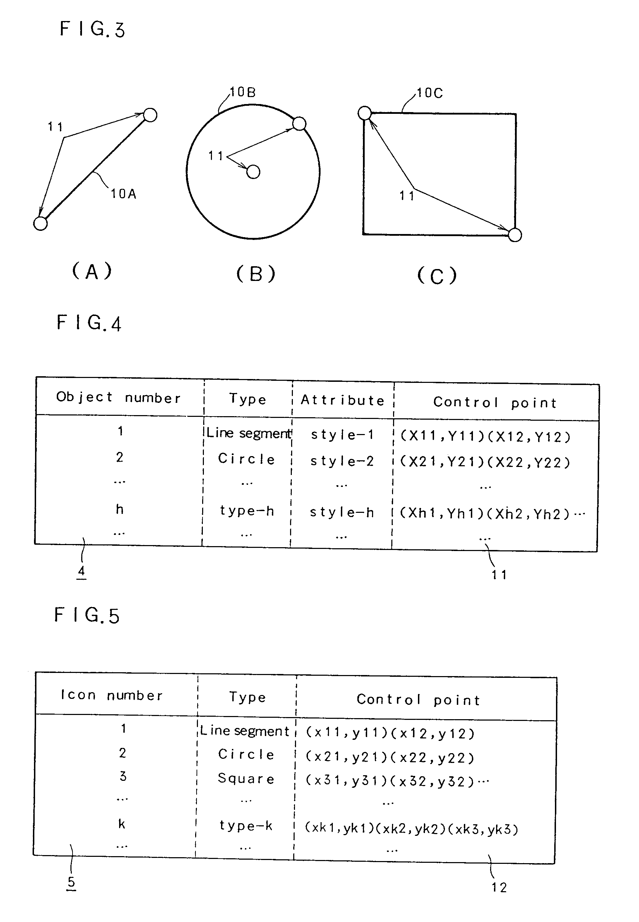

Each graphic icon 10 has control points 11 (see Figure 3). The control points are points on a two-dimensional plane necessary and adequate for defining an image, such as two points at both ends of the line segment 10A in Figure 3 (A), two points on the center and circumference or three points on the circumference of the circle 10B in Figure 3 (B), or two apexes on the diagonal line of the rectangle in Figure 3 (C). The control points are displayed by a special symbol such as a circle or quadrangle so that they can be easily identified by the user.

Data for the process and results of image creation in the drawing area 9B are recorded in the image object table 4. That is, the number, type (e.g. line segment or circle), and attributes (e.g. thick or thin line) of each image object and the data for each image are entered in the control points 11 of the graphic icon 10. The data for the control points 12 indicate the positions (Xh1, Yh1, Xh2, Yh2,...) of the drawing points P in the drawing area 9B using the common X-Y coordinates on the display screen 9.

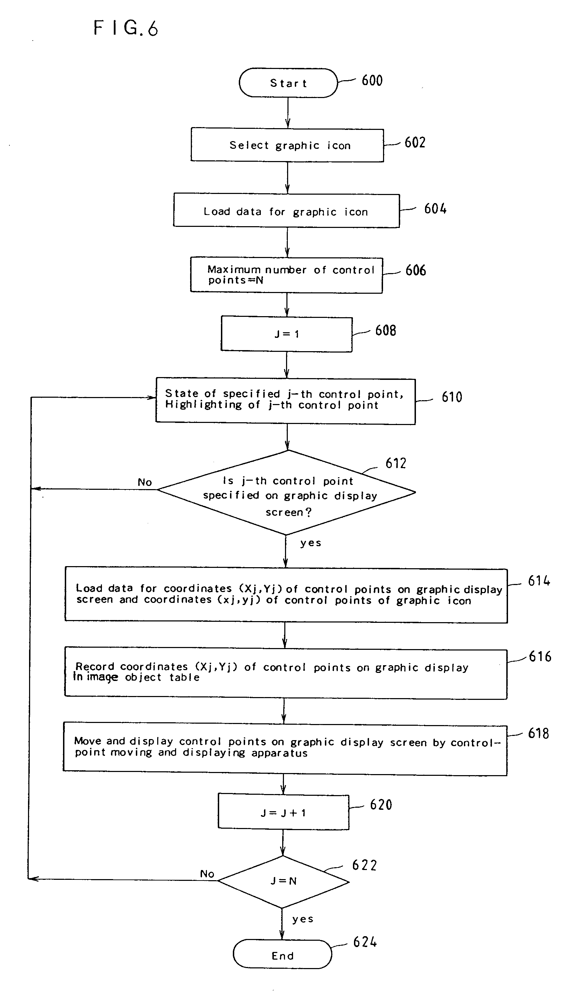

As shown in Figure 5, the data for all graphic icons to be displayed on the screen, that is, the data for the icon number, type of image, and control points 11 are entered in the graphic icon table 5. The data for the control points 11 indicate the positions (xk1, yk1, xk2, yk2,...) of the control points in the icon menu area 9A using the common X-Y coordinates on the display screem 9. The control points necessary and adequate for defining an image are arranged in the graphic icon table 5 in the sequence for operation.

Figure 6 is a flow diagram illustrating the operation of the controller 3.

A plurality of graphic icons 10 held in the graphic icon table 5 are displayed together with their control points 11 in the icon menu area 9A on the display screen 9 through the drawing apparatus 6 and the display screen controller 8. When the user selects one of the displayed graphic icons 10 with the mouse 1, this selection is detected by the mouse controller 2 and transferred to the controller 3 (Step 602). As a result, the graphic icon table 5 is referenced, the data for the graphic icon 10 selected by the user is loaded into the controller 3 (Step 604), and the number of control points N and the operation sequence for the control points are obtained (Step 606). This graphic icon is displayed in reverse video in the icon menu area 9A and the first control point 11 to be determined by the user is highlighted in a different color or by blinking (Step 610). The highlighted points are processed by the drawing apparatus 6 and the display screen controller 8 in accordance with the outputs of the controller 3.

Then, when the user specifies a drawing point P on the display screen 9B with the mouse 1, the point is detected as a control point (Step 612). Thus, whenever a j-th control point is specified the following processes are performed:
(i) the coordinates (Xj, Yj) of the control point 12 of the image and the coordinates (xj, yj) of the control point 11 in the icon menu area 9A on the display screen 9B are obtained (Step 614);
(ii) the coordinates of the control points are sequentially entered in the image object table 4 (Step 616);
(iii) the control point currently highlighted on the graphic icon 10, that is, the control point 11 whose drawing position P was determined, is deleted;
(iv) the same image as the control point 11 is blinked while moving it, in other words, while moving it in the form of animation from the location of the control point 11 of the graphic icon 10 to the drawing point P on the display screen 9B specified by the mouse 1; and
(v) the control point 12 is displayed at the specified drawing point P (Step 618).

Then, the "j = j+1-th" control point 11 that is to be determined next by the user based on the data for the graphic icon 10 is highlighted on the graphic icon 10 (Step 610).

The above operation is repeated for the number of control points N of the selected graphic icon.

A description of the commands used for drawing, display and processing of graphic icons is omitted because they are the same as those for a normal graphic processor (for example, see the official gazette of PUPA No. 2-277127).

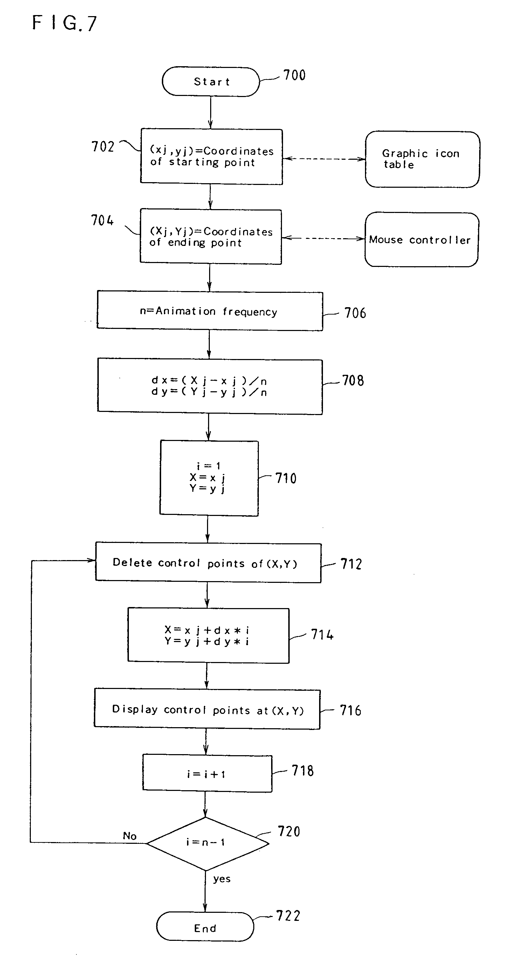

The animations in Step 618 are processed by the control-point moving and displaying apparatus 7 based on the graphic icon table 5 and the detected coordinates of the mouse 1. Figure 7 shows the operation flow chart of the control-point moving and displaying apparatus 7.

First, the coordinates (xj, yj) of the starting point are obtained from the graphic icon table 5 (Step 702), and then the coordinates (Xj, Yj) of the ending point are obtained through the mouse controller 2 (Step 704).

By assuming "n" to be the animation frequency (Step 706), "dx, dy" is obtained by equally dividing the difference between the coordinates (xj, yj) of the starting point and the coordinates (Xj, Yj) of the ending point by "n" (Step 708). Then, the control-point display positions are successively moved from the starting point to the ending point by the amount "dx, dy" (Steps 710 through. 720).

The creating operation of the preferred embodiment of the present invention is described below by using the case in which a square is drawn. In this case, it is assumed that the square has two control points, one at each bottom end.

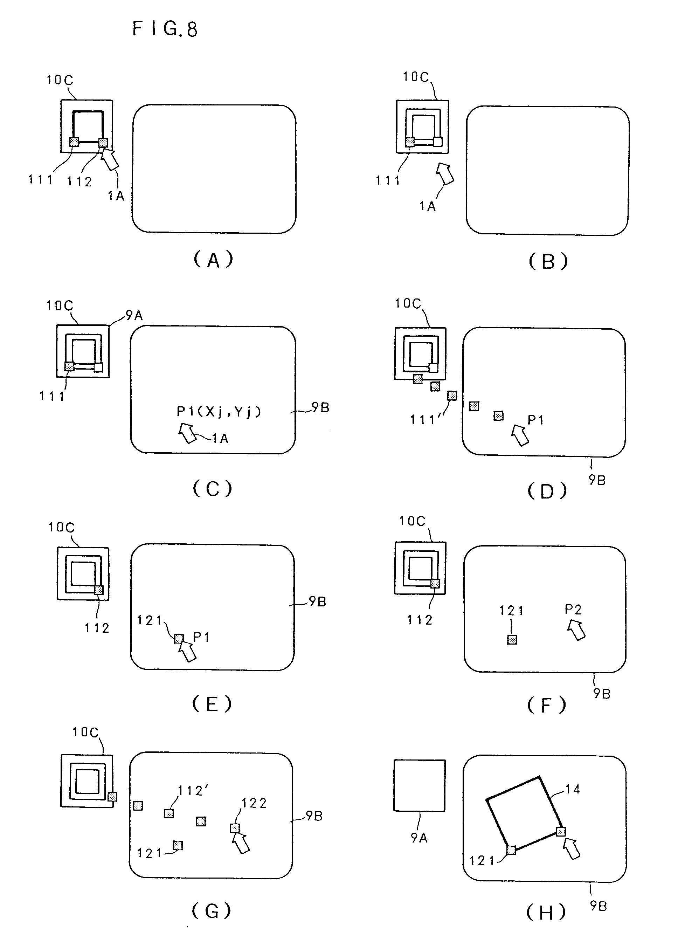

Figure 8 shows the transitions on the screen corresponding to each operation step involved in drawing a square. All operations necessary for drawing a square are completed in three mouse operations by the user, that is, as selection of the square icon 10C, specification of the starting point (control point) of the square, and specification of the ending point (control point) of the square.

The two control points 111 and 112 to be specified are displayed on the square icon (Figure 8 (A)). The user knows that he or she should specify the two points at each bottom end in order to draw a square. After specifying the square icon, the whole square icon 10C is shown in reverse video as shown in Figure 8 (B) to indicate that the starting-point must now be specified. At this time, the control point 111 to be specified next is highlighted by coloring it so that it is differentiated from the other control points. Therefore, the user can easily find the control point to be next specified on the graphic icon.

When a drawing point P1 on the display screen 9B is specified by the mouse (Figure 8 (C)), this point serves as the starting point. Then, the point 111′ that is the same as the control point 111 is moved in the form of animation, that is blinked and moved, from the starting control point 111 of the square icon 10C to point P1 (Figure 8 (D)). Finally, the control point 111 on the square icon 10C disappears, as shown in Figure 8 (E) and the drawing point P1 is displayed on the display screen 9B. Through this display, it is visually clear that the starting point 111 of the square has already been specified and that the system is now ready for the specification of the ending point corresponding to the control point 112. The control point to be next specified, that is, the ending point 112, is highlighted on the graphic icon 10C. When another drawing point P2 is successively specified on the display screen 9B (Figure 8 (F)), this drawing point serves as the ending point of the square. Then, the point 112′ that is the same as the second point (ending point) is moved from the square icon 10C to the drawing point P2, again in the form of animation, and the control point 12 of the image object is displayed (Figure 8 (G)). When both bottom ends of the square have finally been determined, a square 14 having P1-P2 as one side is drawn and the square icon 10C disappears (Figure 8 (H)). Then, the system returns to the non-operation state and the initial state appears on the screen.

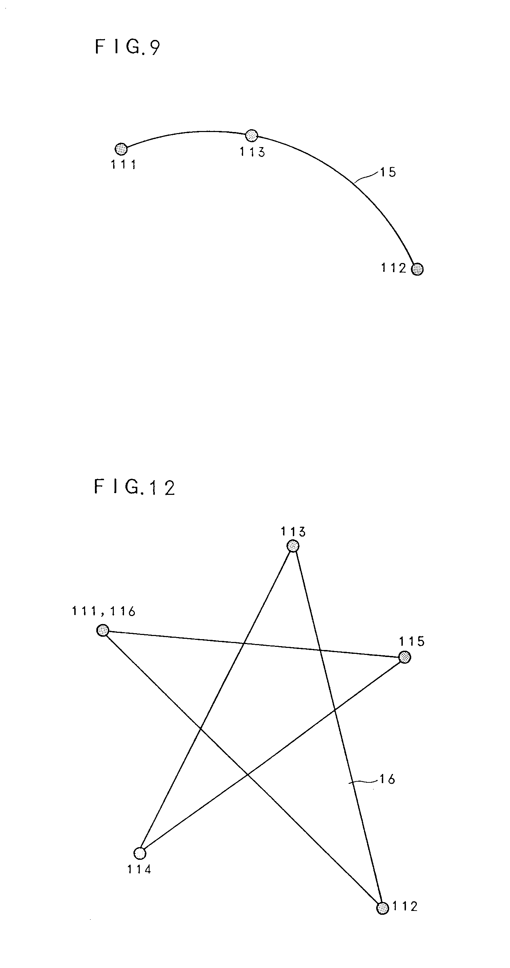

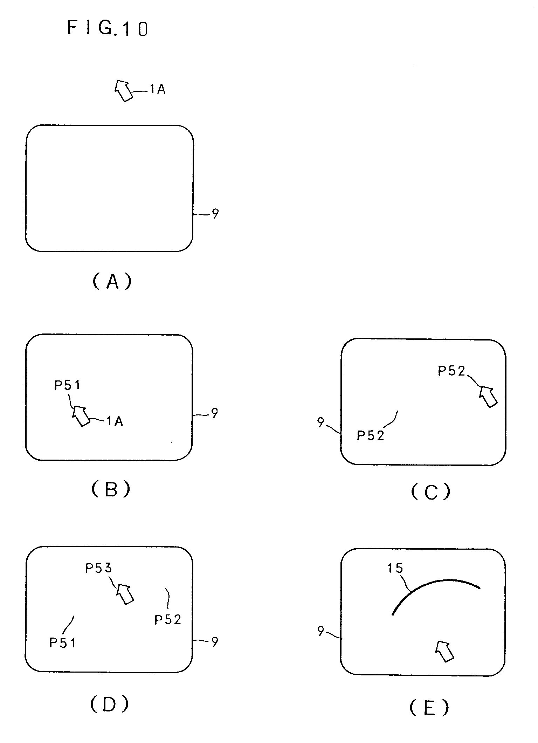

The preferred embodiment of the present invention is very effective for drawing a complicated image consisting of a plurality of control points which must be specified in a special sequence. For the circular arc 15 in Figure 9, for example, it is necessary to specify the control points in order of 111, 112, and 113. Figure 10 shows the process for drawing a circular arc by a conventional method. Figure 10 (A) shows the initial state and Figures 10 (B) through 10 (D) show the states of successively specifying the drawing points P51 through P53. Figure 10 (E) shows the final state which is displayed when the drawing points have been properly specified. Unless the user is familiar with the operations, he or she will not be able to find which portions in which sequence he or she should specify in order to draw a circular arc. During drawing of the circular arc the user will also not know which step out of the processes (A) through (D) he or she is currently at.

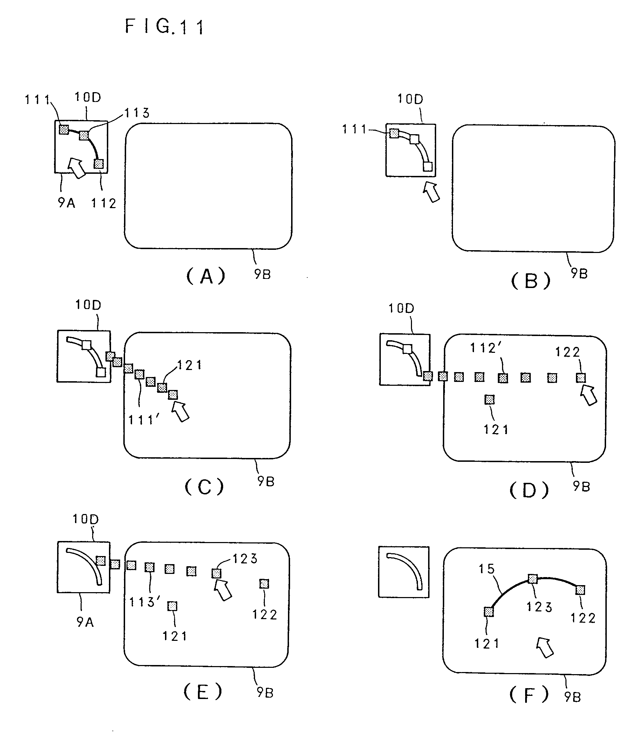

Figure 11 shows the case in which the same operation is executed with apparatus of the preferred embodiment of the present invention. Since at each step (A) through (F) the necessary information is visually displayed with icon 10D, control points (111 through 113 and 121 through 123), and animations (111′ through 113′), the user will know the point to be specified next and what step of the drawing process he or she is currently at.

The effect of the preferred embodiment of the present invention becomes clearer when the number of control points increases to 5 or 6. For example, as shown in Figure 12, six control points (111 through 116) are required to draw an asterisk 16 and their specification sequence is complex. In a conventional method, the state may be shown through words such as "Specify the starting point," but the starting point is not defined and the system must generate names to discriminate each point when the number of control points increases. Even if a number is adopted like "the n-th point", it is not clear at all which one of the control points that constitutes the image is indicated by the number.

The preferred embodiment of the present invention makes it possible to display the control points and their specification sequence. Therefore, beginners can easily execute the operations.

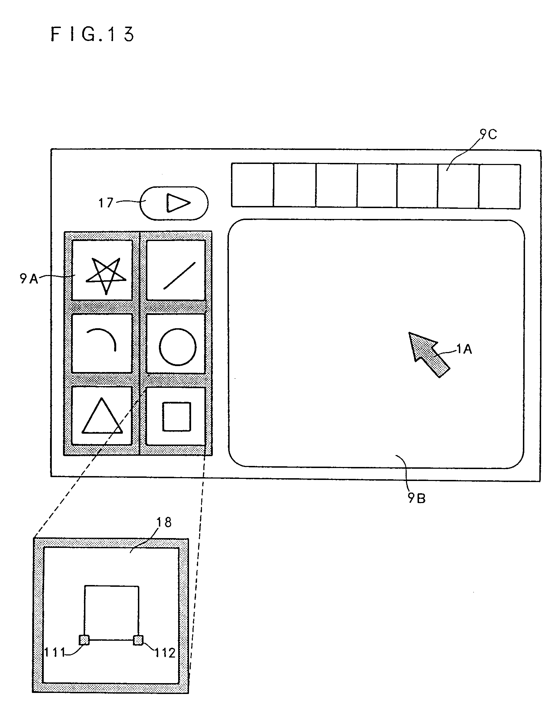

It is desirable to simultaneously display a plurality of graphic icons in the graphic icon menu area 9A in view of operability. However, it may be difficult to display a great many graphic icons together with their control points in a limited space. Therefore, as shown in Figure 13, it is preferable to provide a button 17 for changing the display screen for graphic icon setting so that a selection can be made from many graphic icons. Especially when graphic icons having many control points are included, it is also preferably to display many graphic icons in the icon menu area 9A without using control points, and then to show an enlarged view 18 of the selected graphic icon 10 together with its control points 111 and 112 in the icon menu area 9A. It is also possible, when using an enlarged display instead of using the above animations, to provide a means for teaching the user the operation sequence for the control points 111 and 112, for examble by displaying numbers to indicate the operation sequence together with the control points.

Thus, the image processing apparatus of the preferred embodiment allows the operator to easily find which portions in which sequence he should specify in order to draw an image having many control points.

It also allows the operator to easily understand which control point he or she should specify when drawing a graphic with a mouse.

Moreover, because animation is used, it is clear how the control points of the image icon correspond to those of the image actually drawn on a display screen.

In summary the preferred embodiment of the present invention makes it possible to show a user the image drawing process using graphic icons, and to briefly and clearly indicate which step of the drawing process the user is at.

## Claims

1. An image processing apparatus having an image processing means for executing processing in response to operation commands and data provided through operation of an input device, and a means for creating images on a drawing area of a display screen in accordance with the results of the image processing, said apparatus further comprising:
a graphic icon table for storing a plurality of graphic icons, each graphic icon defining an image, said graphic icon table also storing a plurality of control points associated with each graphic icon which need to be specified in order to create the defined image;
means for displaying said plurality of graphic icons in a graphic icon menu area on said display screen;
means for indicating the control points and the operation sequence in which the control points must be specified, for a chosen graphic icon selected through said input device;
an image object table for recording data representing drawing points as the control points of the image, when the drawing points of the image corresponding to the indicated control points of said chosen graphic icon are specified in the drawing area of said display screen through said input device;
said means for creating images displaying the image corresponding to said chosen graphic icon in said drawing area when all control points of said chosen graphic icon have been specified.

2. An apparatus as claimed in Claim 1, further comprising a control-point moving and displaying means for displaying each control point while continuously moving it from its location in said chosen graphic icon to the corresponding drawing point when that drawing point has been specified.

3. An apparatus as claimed in Claim 2, wherein said control-point moving and displaying means divides up, for each control point of the chosen graphic icon, the distance between the control point and the corresponding drawing point, and displays said control point while blinking and moving it.

4. An apparatus as claimed in any preceding claim, wherein the means for indicating the control points highlights the control points of said chosen graphic icon in the predetermined sequence for operation.

5. An apparatus as claimed in any preceding claim, wherein the means for indicating the control points of said chosen graphic icon includes an enlarging device for enlarging said chosen graphic icon and displaying the enlarged graphic icon together with said plurality of control points in the graphic icon menu area.

6. An apparatus as claimed in any preceding claim, wherein said input device is a mouse.

7. A method of operating an image processing apparatus having an image processing means, a storage device, an input device, and a display screen, said method comprising the steps of:
storing a plurality of graphic icons in said storage device, each graphic icon defining an image, and also storing a plurality of control points associated with each graphic icon which need to be specified in order to create the defined image;
displaying said plurality of graphic icons in a graphic icon menu area on said display screen;
indicating the control points and the operation sequence in which the control points must be specified, for a chosen graphic icon selected through said input device;
recording data representing drawing points as the control points of the image, when the drawing points of the image corresponding to the indicated control points of said chosen graphic icon are specified in a drawing area of said display screen through said input device; and
displaying the image corresponding to said chosen graphic icon in said drawing area when all control points of said chosen graphic icon have been specified.

8. A method as claimed in Claim 7, further comprising the step of displaying each control point while continuously moving it from its location in said chosen graphic icon to the corresponding drawing point when that drawing point has been specified.

9. A method as claimed in Claim 8, further comprising the step of dividing up, for each control point of the chosen graphic icon, the distance between the control point and the corresponding drawing point, before the step of displaying each. control point while continuously moving it.

10. A method as claimed in any of claims 7 to 9, wherein the step of indicating the control points involves highlighting the control points of said chosen graphic icon in the predetermined sequence for operation.

11. A method as claimed in any preceding claim, wherein the step of indicating the control points of said chosen graphic icon includes the step of enlarging said chosen graphic icon and displaying the enlarged graphic icon together with said plurality of control points in the graphic icon menu area.
